# EUROPEAN PATENT SPECIFICATION

(11) **EP 0 751 881 B1**
(45) Date of publication and mention of the grant of the patent: **02.05.2001**
(21) Application number: 95913554.2
(22) Date of filing: 02.03.1995
(51) Int. Cl.: B60R 13/10, G02B 5/128, C09J 133/08, C09J 7/02, C09J 7/04

(54) **RETROREFLECTIVE LICENSE PLATE AND METHOD FOR MAKING SAME**
RETROREFLEKTIVES KENNZEICHENSCHILD UND HERSTELLUNGSVERFAHREN
PLAQUE D'IMMATRICULATION RETROREFLECHISSANTE ET PROCEDE DE FABRICATION

(30) Priority: 24.03.1994 US 217440
(43) Date of publication of application: 08.01.1997
(73) Proprietor: MINNESOTA MINING AND MANUFACTURING COMPANY, St. Paul, Minnesota 55133-3427 (US)
(72) Inventor: WOLF, Stephen, F., St Paul, MN 55133-3427 (US); THAKKAR, Bimal, V., St. Paul, MN 55133-3427 (US)
(74) Representative: VOSSIUS & PARTNER
(86) International application number: US9502716
(87) International publication number: WO9526281

(56) References cited:
- EP-A- 0 360 420
- WO-A-92/20751
- US-A- 3 725 115
- US-A- 4 248 748
- US-A- 4 665 106
- US-A- 4 919 741
- US-A- 5 266 402

## Description

The earliest retroreflective sheetings had an exposed-lens construction, but the retroreflective performance of these sheetings was adversely affected when the lenticular surfaces of the exposed microlenses were covered with water. This problem was answered by embedded-lens retroreflective sheeting in which, as taught in U.S. Patent No. 2,407,680 (Palmquist et al.), a monolayer of the microlenses is embedded within the sheeting which has a flat, transparent cover film. The cover film is provided by coating a solution of a thermoset resin such as an alkyd resin or acrylic resin onto the microspheres and then curing the coating, typically by drying it. This sheeting construction allows incident light rays to be focused onto the specularly reflective layer of the sheeting irrespective of whether the front of the sheeting is wet or dry.

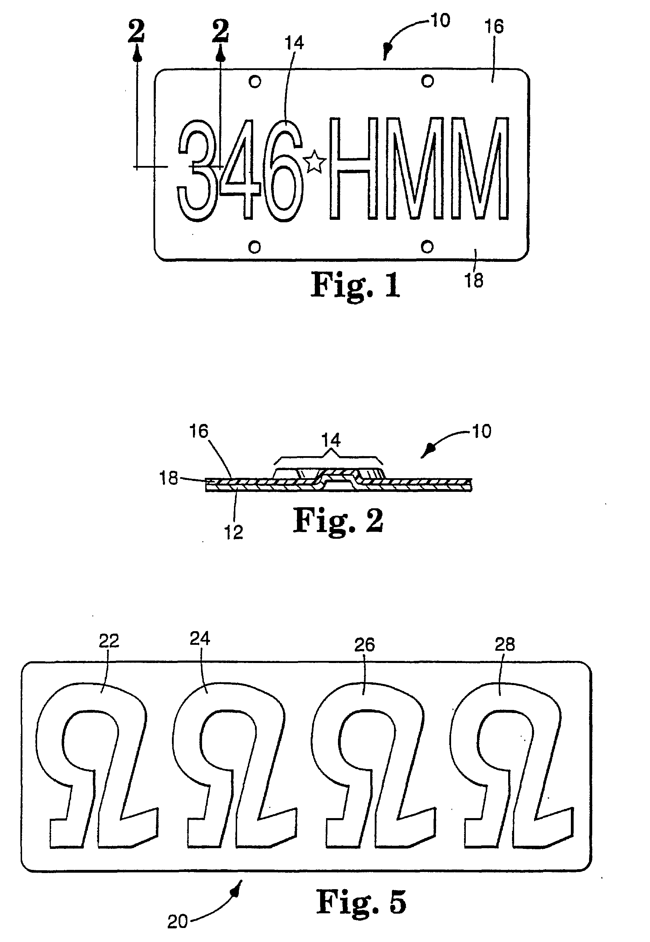

Another type of embedded-lens retroreflective sheeting is taught in U.S. Patent No. 4,511,210 (Tung et al.). As shown in Figure 6 thereof, such sheeting comprises base sheet material 33 that in turn comprises layer 25 of pressure-sensitive adhesive, specularly reflective layer 24, transparent spacing layer 23, and monolayer of microspheres 21 partially protruding from the front surface of the sheet material. Referring to Figure 2 thereof, oriented polymethyl methacrylate film 26 is typically coated with layer of pressure-sensitive acrylate adhesive 27 and pressed against the microsphere-exposed front surface, thereby embedding the microspheres into the adhesive and forming a transparent front layer on the sheeting. Before the polymethyl methacrylate film is applied, the base sheet material is optically incomplete, and its elements are selected so that application of the flat polymethyl methacrylate cover film completes the optics for effective retroreflection. Alternatively, as described in Example 4 of the patent, sheet material 33 can be adhered to a metal plate, and the plate can be embossed to form a license plate. Typically, letters or numbers are embossed into the license plate to provide for conspicuity and later painted or otherwise colored to provide for greater contrast with the retroreflective background areas of the license plate, The plate is then dipped into a license plate coating solution and the coating dried and cured to thereby complete the optical system. Typically, a solvent-based, hardenable resin solution is used for the license plate coating solution. If a thermoplastic resin such as a plasticized polyvinyl chloride resin is used as the coating solution, this solution can be coated over the microsphere-exposed front surface of sheet material 33 and cured before the embossing operation is undertaken.

Recently there has been interest in eliminating the need for the solvent-based, hardenable resin solution for environmental and economic reasons. Elimination of this resin can be accomplished by providing cover film 26 and adhesive layer 27 discussed above and laminating the cover film and adhesive layer to the microsphere-exposed front surface before the sheet material is adhered to a metal plate and the embossing operation carried out. In other words, a sheeting similar to the one shown in Figure 2 of U.S. Patent No. 4,511,210 is first provided, next adhered to a metal plate, and then embossed. Such retroreflective sheetings are referred to herein as "precleared" license plate sheetings.

U.S. Patent No. 3,190,178 (McKenzie) solved in a different way the problem of retaining retroreflectivity while wet. Its solution involved modifying retroreflective sheeting of the exposed-lens type wherein the lenses are partially embedded in a binder layer. As described in that patent, the exposed lenses are protected by a flat, transparent cover film to which the binder layer is sealed along a network of interconnecting lines to form a plurality of hermetically sealed cells within which the microspheres are encapsulated and have an air interface. Such wet-reflecting sheeting is often referred to as "encapsulated-lens" retroreflective sheeting. The transparent cover film is a preformed plastic film. However, the base material underlying the cover film of encapsulated-lens retroreflective sheeting is optically complete so as to be capable of retroreffection.

In making license plates with precleared license plate sheetings, the cover film is typically highly elastic and stretched during the embossing process. This stretching places stresses on other parts of the sheeting, such as the adhesive layer used to secure the sheeting to the license plate blank. Because of the elastic memory of the cover film, the sheeting can easily "pop off" of or delaminate from the license plate blank, typically in areas immediately adjacent to the embossed letters or numerals, in a matter of days or weeks. This "pop off" is considered highly undesirable.

It is known in the art to make license plates comprising precleared license plate sheetings by securing the precleared sheeting to a license plate blank through an adhesive composition comprising a copolymer of isooctyl acrylate and acrylic acid, present in a weight ratio of about 90:10, and a bisamide crosslinker. Problems with "pop off" can generally be reduced by providing sufficient time after application of the sheeting to the license plate blank but before embossing of the resultant composite to permit sufficient "wetting" of the adhesive onto the surface of the license plate blank. Minnesota Mining and Manufacturing Company recommends that a minimum of 48 hours be provided between when its KEFLECTO-LITE™ Reflective Sheeting is applied to a metal substrate to yield a license plate blank and when the license plate blank is embossed. The term "wetting" refers to the ability of the adhesive to conform to or contact the surface on which the adhesive is applied. Lower viscosity adhesives tend to "wet" the surface of the license plate blank more rapidly than higher viscosity adhesives. However, when lower viscosity adhesives are used, the cohesive strength of the adhesive tends to suffer and cohesive splits or material separations within the adhesive layer can occur as a result of the embossing process. Such cohesive splits within the adhesive layer tend to reduce the durability of the overall license plate sheeting.

EP-A-360 420 refers to a specific curable composition for use to prepare a flexible, dimensionally stable coating including a semi-interpenetrating polymer network. The composition is employed in a space coat for a retroreflective sheeting of an embossable substrate.

US-A-3,725,115 refers to a method of forming pressure-sensitive adhesive articles. As one step of this process a solventless radiation-sensitive composition comprising one or more tacky low molecular weight polymers is subjected to ionizing irradiation.

Crosslinking an adhesive increases its cohesive strength but also increases its viscosity, thus increasing the time it takes for the adhesive to wet the surface of a license plate blank. It would be highly desirable to decrease the time between application of the sheeting to the license plate blank and the embossing operation so that license plate manufacturers do not have to store pre-embossed composites for an extended time.

The present invention provides a retroreflective information plate; e.g., a license plate, that typically has minimal "pop off' problems and good conformance of its precleared retroreflective sheeting to its underlying information plate blank, i.e., substrate. Information plates of the invention comprise electron beam-cured adhesives having high cohesive strength, fast wetting characteristics, and high adhesive strength. It also provides a method for making such plates that offer greater convenience and shorter processing time than was heretofore required.

As a result of the use of an adhesive having fast wetting characteristics, information plates of the invention can typically be made using a cost-efficient manufacturing operation, preferably a continuous one, because much less time is required between the time when the sheeting is applied to the information plate blank and the time when this composite is embossed. Preferably, the sheeting application and embossing steps are carried out sequentially in a continuous manufacturing operation.

In brief summary the present invention refers to information plates according to any of claims 1 to 11 and to a method of making such information plates according to any of claims 12 to 13. Electron beam crosslinking as described herein has been found to provide superior results as compared to other techniques for crosslinking adhesives.

By "pressure-sensitive" is meant an adhesive that is characterized by a property which permits the adhesive-coated sheeting to adhere on mere contact with the polar substrate to which the adhesive is applied. Once the adhesive-coated sheeting contacts the polar substrate, it can no longer be moved about without first being stripped from the polar substrate. An advantage of the present invention is that the method of claims 12 or 13 can be performed in a faster, more convenient process, thereby providing substantial advantages in an industrial production.

The invention will be further explained with reference to the drawing, wherein:
Figure 1 is a front or top plan view of an information plate, e.g., a license plate, comprising a polar substrate and a retroreflective sheeting adhered thereto with an electron-beam cured adhesive in accordance with the invention;
Figure 2 is an enlarged fragmentary cross sectional view of the plate shown in Figure 1 taken along the line 2-2, showing the retroreflective sheeting schematically as a single layer for ease in illustrating an embossed character of the information plate;
Figure 3 is an enlarged fragmentary cross sectional view of an information plate comprising an embedded lens retroreflective sheeting and a polar substrate;
Figure 4 is an enlarged fragmentary cross sectional view of an information plate comprising an encapsulated lens retroreflective sheeting and a polar substrate; and
Figure 5 is a front or top plan view of another information plate wherein four omega shapes are embossed therein at four different embossing depths.

These figures, which are idealized, are not to scale and are intended to be merely illustrative and nonlimiting.

Referring to Figures 1 and 2, information plate 10, e.g., a license plate, according to the invention comprises polar substrate 12 (see Figure 2), typically formed from aluminum, having one or more raised indicia or characters 14 embossed thereon. Characters 14 are generally embossed such that they are raised, i.e., project outwardly, from front surface 16 of information plate 10; that is, as one views Figure 1, characters 14 project toward the viewer. This can be better understood by reference to Figure 2. Characters 14 will typically be embossed a total of about 60 to 120 mils (0.15 to 0.30 centimeters ("cm")) relative to the remainder of information plate 10. It will be understood that embossing depths outside this range may be used if desired. Information plate 10 will typically carry one or more embossed characters 14 and the characters may include alphanumeric characters selected from one or. more desired fonts and/or special symbols such as stars, state logos, national crests, etc. For example, motor vehicle license plates typically contain four to eight alphanumeric characters and one or more special symbols.

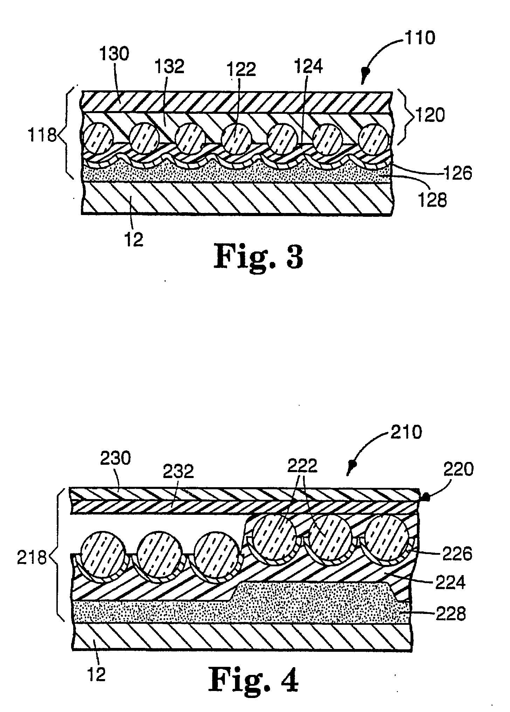

In general, it is desirable that at least portions of first surface 16 be substantially retroreflective so that information plate 10 will be very conspicuous, even at night and when viewed from a considerable distance. In general, it is desirable to provide an information plate that is very strongly retroreflective so that it can be seen from a considerable distance with only a small amount of light directed thereon. In general, this is why a retroreflective sheeting is adhered to the substrate of the information plate. Further, an enclosed-lens arrangement (e.g., an embedded-lens or encapsulated-lens retroreflective sheeting) is typically preferred at least in part because good retroreflection can be obtained under both wet and dry conditions. As shown schematically in Figure 2, retroreflective sheeting 18 is adhered to polar substrate 12. The cross sectional view of Figure 2 is intended to merely show one of embossed characters 14 and is not intended to show the actual construction of retroreflective sheeting 18 or the adhesive of sheeting 18, which adhesive is used to secure sheeting 18 to polar substrate 12. A commonly used type of such a sheeting is an embedded-lens retroreflective sheeting that can be readily adhered to the polar substrate. Such a sheeting is well-known, and generally represented, in enlarged, schematic cross sectional view in Figure 3. A second type of sheeting which could be used is an encapsulated-lens retroreflective sheeting, a representative view of such sheeting being shown schematically in Figure 4.

No embossed characters 14 are illustrated in the cross sectional views of Figures 3 and 4 to simplify the illustrations therein. Turning to Figure 3, information plate 110 comprises embedded-lens retroreflective sheeting 118 adhered to polar substrate 12. Sheeting 118 comprises cover film 120 which is typically flat and transparent, monolayer of microspheres 122, transparent spacing layer 124, specularly reflective layer 126, and electron beam-cured adhesive layer 128 according to the invention. Cover film 120 is elastic, durable, and transparent and can have any desired construction. Cover film 120 illustrated in Figure 3 comprises outer layer 130 and inner layer 132. U.S. Patent No. 4,663,213 (Bailey et al.) discloses a number of suitable cover films, one of these films comprising a copolymeric outer layer formed from acrylic monomers and a urethane inner layer. U.S. Patent No. 4,511,210 (Tung et al.) discloses cover films comprising an oriented polymethyl methacrylate outer layer and a pressure-sensitive acrylate adhesive inner layer. In any event, the inner layer should closely conform to the microspheres and be intimately bonded to the microspheres and to the surface of spacing layer 124 between the microspheres, thus providing an embedded-lens retroreflective sheeting.

Referring to Figure 4, information plate 210 comprises an encapsulated lens retroreflective sheeting 218 adhered to polar substrate 12. Sheeting 218 comprises cover film 220, monolayer of microspheres 222, binder layer 224, specularly reflective layers 226, and electron beam-cured adhesive layer 228 according to the invention. Cover film 220 may be similar to cover film 120 of sheeting 118 shown in Figure 3, and thus, comprises outer layer 230 and inner layer 232. However, in this embodiment, inner layer 232 is sealed to binder layer 224 along a network of interconnecting lines to form a plurality of hermetically sealed cells within which the microspheres are encapsulated and have an air interface.

The cover film of the retroreflective sheeting preferably has good stretchability so that the sheeting can be more easily flexed into contact with the raised indicia or characters which are embossed in the information plate and so that the cover film does not fracture, crack, or split as a result of the embossing process. To permit the information plate to be embossed in a male/female die to a depth of about 2.5 millimeters ("mm") with no danger of cracking the cover film, the elongation of the cover film should be at least about 100 percent (per ASTM Test Method D882-80a), preferably at least about 200 percent A problem is that cover films having these elongation properties typically tend to have an elastic memory, and thus, tends to return to their pre-elongation shape. This elastic memory exerts a force on the remainder of the sheeting, which force generally tends to increase the probability that the sheeting will "pop off" the polar substrate as described above. It has been discovered that such "pop off' problems can largely be eliminated if an electron beam-cured adhesive composition is used to adhere the sheeting to the polar substrate. Such adhesive compositions tend to exhibit good wetting characteristics, high cohesive (internal) strengths, and high adhesive properties relative to polar substrates such as aluminum license plate blanks. Adhesive compositions crosslinked with electron beam radiation provide superior performance to adhesive compositions that are crosslinked via other means.

As mentioned above, the adhesive compositions used in the present invention are pressure-sensitive in character. For environmental reasons, the pressure-sensitive adhesive compositions used in the present invention are preferably "hot-melt" compositions, sometimes referred to as "HMPSA" or "hot melt pressure-sensitive adhesives". "Hot-melt" adhesive compositions are solid materials, typically containing substantially no solvents, that are heated until their viscosities are low enough that they can be coated or applied onto a substrate and then cooled to ambient temperature to yield an adhesive bond. The adhesive composition can be applied by any conventional means such as roller coating, dip coating, extrusion, and spray coating. The adhesive is then subjected to electron beam radiation to form a pressure-sensitive adhesive having superior properties for use in the invention. Hot-melt adhesives are 100 percent solids and, hence, require no solvents. Preferred hot-melt pressure-sensitive adhesive compositions for use herein are those having a melt viscosity between about 500 and about 100,000 centipoises (0.5 and 100 Newton-seconds/meter²) at 350°F (177°C). It should be understood, however, that other pressure-sensitive adhesive compositions, e.g., solvent cast adhesive films, can be used if desired.

Suitable acrylic polymers include those formed by polymerizing polar monomers with acrylic monomers. Suitable acrylic monomers are alkyl acrylate monomers wherein the alkyl radical of the alkyl acrylate monomer contains from about 4 carbon atoms to about 12 carbon atoms, alkyl methacrylate monomers wherein the alkyl radical of the methacrylate monomer contains from about 6 to about 12 carbon atoms, and mixtures thereof. For example, the following acrylic monomers can be employed: isooctyl acrylate, butyl acrylate, 2-ethylhexyl acrylate, 2-ethylhexyl methacrylate, octyl acrylate, octyl methacrylate, and mixtures thereof. Illustrative suitable polar monomers include acrylic acid, methacrylic acid, itaconic acid, styrene sulfonic acid, maleic acid, fumaric acid, citraconic acid, and mixtures thereof. Preferred acrylic polymers can be formulated by using isooctyl acrylate or 2-ethylhexyl acrylate as the acrylic monomer and acrylic or methacrylic acid as the polar monomer. The acrylic and polar monomers typically should be present in a weight percent ratio of about 87.5:12.5 to about 95:5, respectively, preferably in a weight percent ratio of about 87.5:12.5 to about 93:7, and most preferably in a weight percent ratio of about 90:10. Speaking in general terms, the higher the percentage of acrylic monomer, the tackier the adhesive; conversely, the higher the percentage of polar monomer, the higher the shear properties. Most preferably, adhesive compositions used herein comprise an acrylic polymer formed by using isooctyl acrylate and acrylic acid monomers in a 90:10 weight percent ratio.

The adhesive composition is typically cured by an electron beam dosage amount of between about 3 and about 8 megarads (30 and 80 kGray), preferably about 4 to about 7 megarads (40 and 70 kGray). If the electron beam dosage is too low, the resultant adhesive will tend to be subject to cohesive failure and the retroreflective sheeting will tend to pop off the substrate. If the electron beam dosage is too high, the resultant adhesive layer will tend to be too brittle such that adhesive layer may be subject to reduced adhesive bond strength to the substrate. The adhesive composition before being cured typically has an inherent viscosity of from about 0.5 to about 1.5 deciliters/gram ("dl/g"), more preferably about 0.6 to about 1.0 dl/g, and most preferably about 0.75 dl/g. Compositions having these viscosities tend to be more conveniently processed and handled. It will be understood that compositions having an inherent viscosity outside this range may be used in accordance with the invention.

The adhesive layer should be thick enough to provide good adhesion between the retroreflective sheeting and the substrate. Progressively thicker adhesive layers will tend to improve the adhesion by reducing the stress at the substrate/adhesive layer interface, however, such layers will also typically represent increased cost. Suitable adhesive thickness is also dependent in part upon the relative stiffness of the retroreflective sheeting, the smoothness of the substrate, etc. Typically the adhesive layer will be between about 0.5 and 5 mils (12 and 130 micrometers), preferably between about 1.0 and 2.0 mils (25 and 50 micrometers).

Illustrative examples of materials that can be used as substrates in the present invention include aluminum or steel. Such materials are often treated to improve adhesion of retroreflective sheeting, and/or the durability of the substrate. For instance, steel is often electroplated with zinc, e.g., 0.1 mil (2.5 micrometer) thick; nickel/zinc coated; zinc coated; zinc coated and phosphatized; or galvanized. The treatment should be such as to withstand the embossing step without flaking or cracking from the surface of the substrate material. The invention may also be used with untreated aluminum or steel.

The method of the invention comprises the steps of:
a) providing a polar substrate;
b) providing a retroreflective sheeting with an electron beam-cured, pressure-sensitive adhesive on the bottom thereof, the adhesive comprising an acrylic polymer,
c) adhering the bottom of the retroreflective sheeting to a major face of the polar substrate through the adhesive to form a composite; and
d) embossing the composite to form an embossed information plate comprising raised indicia which protrude from the major face of the polar substrate.

Unlike prior processes in which a substantial time of many hours between adhering the retroreflective sheeting to the substrate and embossing the composite was required, the present invention enables these two steps to be done within 1 hour of each other.

The present invention refers to information plates according to any one of claims 1 to 11 and to a process of making such plates according to claims 12 or 13.

Preferred embodiments of the present invention are described below
1. An information plate comprising an embossed polar substrate having raised indicia protruding from a visible surface thereof and a continuous retroreflective sheeting adhered to the raised indicia and to the remainder of the visible surface of the polar substrate through an electron beam-cured, pressure-sensitive adhesive composition, the adhesive composition comprising an acrylic polymer formed by polymerizing a polar monomer with an acrylic monomer, and the retroreflective sheeting comprising an elastic, durable, and transparent cover film.
2. The information plate of item 1 wherein the adhesive composition is a hot-melt pressure-sensitive adhesive composition.
3. The information plate of item 1 wherein the acrylic monomer is selected from the group consisting of alkyl acrylates having an alkyl radical which contains from about 4 to about 12 carbon atoms, alkyl methacrylates having an alkyl radical which contains from about 6 to about 12 carbon atoms, and mixtures thereof.
4. The information plate of item 1 wherein the polar monomer is selected from the group consisting of acrylic acid, methacrylic acid, itaconic acid, styrene sulfonic acid, maleic acid, fumaric acid, citraconic acid, and mixtures thereof.
5. The information plate of item 1 wherein the adhesive composition comprises a copolymer of isooctyl acrylate and acrylic acid.
6. The information plate of item 5 wherein the weight percent ratio of isooctyl acrylate to acrylic acid is about 87.5:12.5 to about 95:5.
7. The information plate of item 1 wherein the electron beam dosage is between about 30 KGray (3 megarads and about 80 KGray (8 megarads).
8. The information plate of item 1 wherein the electron beam dosage is between about 40 KGray (4 megarads and about) 70KGray (7 megarads).
9. The information plate of item 1 wherein the inherent viscosity of the adhesive composition before being cured is between about 0.5 and about 1.5 deciliters/gram.
10. The information plate of item 9 wherein the inherent viscosity is about 0.6 to about 1.0.
11. The information plate of item 1 wherein the polar substrate is aluminum.
12. The information plate of item 1 wherein the retroreflective sheeting is selected from the group consisting of embedded-lens retroreflective sheetings and encapsulated-lens retroreflective sheetings.
13. The information plate of item 1 wherein said indicia comprises more than one alphanumeric character.
14. The information plate of item 1 wherein said indicia have an embossed depth of between about 0.15mm (60 mils) to about 0.3mm (120 mils).
15. A method of making an embossed information plate comprising:
   a) providing a polar substrate;
   b) providing a retroreflective sheeting with an electron beam-cured, pressure-sensitive adhesive composition on the bottom thereof, the adhesive composition comprising an acrylic polymer formed by polymerizing a polar monomer with an acrylic monomer and the retroreflective sheeting comprising an elastic, durable, and transparent cover film.
   c) adhering the bottom of the retroreflective sheeting to a major face of the polar substrate through the adhesive to form a composite; and
   d) embossing the composite to form an embossed information plate comprising raised indicia which protrude from the major face of the polar substrate.
16. The method of item 15 wherein the adhesive composition is a hot-melt pressure-sensitive adhesive composition.
17. The method of item 15 wherein the acrylic monomer is selected from the group consisting of alkyl acrylates having an alkyl radical which contains from about 4 to about 12 carbon atoms, alkyl methacrylates having an alkyl radical which contains from about 6 to about 12 carbon atoms, and mixtures thereof.
18. The method of item 15 wherein the polar monomer is selected from the group consisting of acrylic acid, methacrylic acid, itaconic acid, styrene sulfonic acid, maleic acid, fumaric acid, citraconic acid, and mixtures thereof.
19. The method of item 15 wherein the adhesive composition comprises a copolymer of isooctyl acrylate and acrylic acid.
20. The method of item 15 wherein the weight percent ratio of isooctyl acrylate to acrylic acid is about 87.5:12.5 to about 95:5.
21. The method of item 15, wherein the electron beam dosage is between about 30KGray (3 megarads) and about 80KGray (8 megarads).
22. The method of item 15 wherein the electron beam dosage amount is between about 40KGray (4 megarads) and about 70KGray (7 megarads).
23. The method of item 15 wherein the inherent viscosity of said adhesive composition before being cured is between about 0.5 and about 1.5 deciliters/gram
24. The method of item 23 wherein the inherent viscosity is about 0.6 to about 1.0.
25. The method of item 15 wherein the polar substrate is aluminum.
26. The method of item 15 wherein the retroreflective sheeting is selected from the group consisting of embedded-lens retroreflective sheetings and encapsulated-lens retrorefiecfive sheetings.
27. The method of item 15 wherein embossing the composite is done within one hour of when adhering the retroreflective sheeting to the polar substrate is done.
28. The method of item 15 wherein embossing the indicia comprises embossing more than one alphanumeric character.
29. The method of item 15 wherein embossing indicia comprises embossing the indicia to an embossed depth of between about 0.15mm (60 mils) and 0.3mm (120 mils).

### Examples

The invention will be further explained by the following illustrative examples which are intended to be nonlimiting. Unless otherwise indicated, all amounts are expressed in parts by weight.

In each Example and Comparative Example, the reflective sheetings was made as follows. To form a cover film, an extrusion-grade, thermoplastic, high molecular weight copolymer of 91 parts of ethylene monomer and 9 parts of acrylic acid monomer (PRIMACOR™ 3440 of Dow Chemical Co.) having a melt index of 10.0 was compounded with a weathering stabilizer system consisting of 2.5 parts of a U.V. absorber, 1.0 parts of a hindered amine light stabilizer, and 0.5 parts of an antioxidant. This stabilized polymer was extruded from a single screw extruder onto a biaxially oriented polyethylene terephthalate carrier web (hereinafter called "PET carrier") to provide a film caliper of about 50 micrometers. The melt temperature of the stabilized polymer was believed to have been about 280°C.

The extruded film was laminated as cover film 120 of Figure 3 to retroreflective sheeting 118 containing a monolayer of glass microspheres having an average diameter of about 60 micrometers and a refractive index of about 2.26 and being substantially fully embedded in a spacing layer which comprised a plasticizer and a polyvinyl butyral resin crosslinked through its hydroxyl groups to a substantially thermoset state. Underlying and spaced from the microspheres by the spacing layer was a specularly reflective layer of vapor-deposited aluminum having a thickness of about 100 nanometers. Covering the aluminum layer was a layer of the subject pressure-sensitive adhesive having a thickness of about 1.5 mils (37.5 micrometers). The same adhesive thickness was used in each example to provide a good basis upon which to compare the results that were obtained.

Unless otherwise indicated, the following test methods were used.

### Gel Content

Gel content provides an indication of the amount of crosslinking in an adhesive (and therefore is an indicator of the cohesive strength of an adhesive) and typically preferably ranges from about 60 to about 80 percent. Gel content is defined as the percentage of insoluble material in a particular adhesive sample when dissolution is attempted in a good organic solvent. Gel content was measured by placing 0.5 grams of the adhesive sample onto a fine mesh wire screen and submerging the screen and sample into 100 milliliters of ethyl acetate reagent. The sample was then permitted to dissolve for 48 hours after which time the adhesive sample and screen were removed from the reagent and the adhesive sample dried at 200°F (93°C) for 30 minutes, cooled to room temperature, and reweighed to determine its final weight. The gel content was calculated as the ratio of the final weight of the adhesive sample to its initial weight, and expressed in weight percent.

### Inherent Viscosity

Inherent viscosity ("I.V.") provides an indication of the molecular weight of an uncured adhesive formulation or degree of entanglement of the polymers making up the uncured adhesive formulation. Inherent viscosity was measured before the adhesive was crosslinked and determined by a modification of ASTM D1601-78 in which the ethyl acetate was used as a solvent and a No. 50 CANON-FENSKE™ Viscometer was used as the measuring device. The measurements were done at 25°C and the results are reported in deciliters/gram ("dl/g").

### Pop Off

To assess the pop off resistance of each adhesive, the adhesive was laminated to the specularly reflective aluminum layer, i.e., the bottom of the retroreflective sheeting, and the release liner was stripped away. The bottom of the resulting retroreflective sheeting was then laminated to a major face of a 0.8 mm thick chromate-treated aluminum panel (in accordance with ASTM B-449-67, Class 2) which served as a license plate blank having a polar substrate to form a composite. Lamination was achieved by pressing the sheeting against the aluminum panel with a pressure roller set at a pressure of 40 pounds/in² (2.76 x 10⁵ N/m²). Next, a variable embossing pattern was impressed into the composite of the sheeting and aluminum panel using a male/female mold to form a series of four raised indicia in the form of omega shapes as shown in Figure 5. This embossing was performed within no sooner than 30 minutes and no longer than 60 minutes after the lamination. The resulting information plate 20 comprised four omega shapes 22, 24, 26, 28, each 74.1 mm tall and 52.6 mm wide, which protruded from the major face of the aluminum panel at respective embossing depths of 2.00, 2.25, 2.50 and 2.75 mm. The V-shape in the lower right hand side (as seen in the Figure) of each omega character had an included angle of 48°, The sides of the characters were angled inward at an included angle of 60° so that the top of each character was slightly narrower than the base of the character (as can be seen in Figure 2).

After storing the embossed license plates at room temperature and humidity for about 4 weeks, the amount of pop off or delamination of the sheeting from the license plate blank was observed qualitatively by visual examination and quantitatively by utilizing a ruler to measure the distance in millimeters between the sheeting and the license plate blank in the V-shaped area of the omega shape which had been embossed to a depth of 2.25 mm. The amount of pop-off of the sheeting from the aluminum license plate blank is shown in the Tables and expressed in millimeters.

### Example 1 And Comparative Example C1

An acrylic adhesive was made by solution polymerization as follows:
90 parts of isooctyl acrylate monomer and 10 parts of acrylic acid monomer were added to 100 parts of a solvent comprising 65 parts of heptane and 35 parts of acetone. To this solution was added 0.1 parts of 2,2'-azobisiso-butyronitrile free radical initiator available under the trade designation VAZO™ 64 from E. I. DuPont de Nemours of Wilmington, Delaware. The reagent mixture was placed in a 1 liter bottle and purged with nitrogen at a rate of 1 liter/minute for 2 minutes. The bottle was then capped and reacted at 61°C for 24 hours. The resulting polymer had an inherent viscosity of 0.73 (ethyl acetate) and was diluted to 52.6 percent solids with a 94/6 mixture of ethyl acetate/isopropanol.

The solvents from the adhesive solution described above were substantially completely removed from the adhesive formulation by distillation. The resulting solventless hot-melt adhesive composition was then heated to 180°C and extruded onto release paper at a coating thickness of 9.5 grains per 4 inch by 6 inch (0.62 grams per 10.2 cm by 15.2 cm) area of release paper. The adhesive was cooled to room temperature and then covered with a 1.5 mil (37.5 micrometers) thick polyethylene liner for protection.

The adhesive was then cured by use of electron beam radiation with total electron beam dosage amounts varying from 3 to 8 megarads (30 to 80 kGray) as indicated. The adhesive was irradiated through the polyethylene liner with an electron beam set at 175 keV and a beam current set to achieve the desired beam dosage. The adhesives with varying irradiation dosage are denoted as Examples 1A-1F below.

For Comparative Example C1, 12.7 microequivalents (µeq) of a bisamide crosslinker were added per gram of the solid adhesive to the adhesive solution described above. The bisamide crosslinker is more fully described as an organic solvent solution of N,N'-bis-1,2-propyleneisophthalamide. The appropriate amount of bisamide solution and acrylic adhesive solution were mixed and coated out onto silicone release liner using a knife coater with the bar set to a 4 mil (100 micrometer) gap. The coated solution was allowed to air dry for 10 minutes to remove most of the solvent and then was heated at 150°C for 5 minutes to effect crosslinking of the system and yield a 1.5 mil thick (37.5 micrometers) thick adhesive layer.

The cure conditions of, and gel content and pop off results obtained with, the adhesives in Examples 1A-1F and Comparative Example C1 are tabulated in Table 1.

**Table 1**

| Example No. | Cure | Gel Content (wt. %) | Pop-off (mm) |
|---|---|---|---|
| C1 | 12.7 µeq bisamide | 72 | 2.5 |
| 1A | 30 kGray | 59 | 5.5 |
| 1B | 40 kGray | 68 | 3.0 |
| 1C | 50 kGray | 74 | 1.5 |
| 1D | 60 kGray | 79 | 1.5 |
| 1E | 70 kGray | 81 | 2.0 |
| 1F | 80 kGray | 84 | 3.0 |

As shown in Table 1, the amount of pop-off was significantly reduced by use of an electron beam-cured adhesive which was cured by an electron beam dosage amount of more than about 4 megarads (40 kGray) and less than about 8 megarads (80 kGray).

### Example 2

The acrylic adhesive solution prepared for Examples 1A-1F and Comparative Example C1 was coated onto a release liner from solution in a manner identical to that described in Comparative Example Cl except that no bisamide crosslinker was added before coating. After air drying the adhesive for 10 minutes at room temperature the liner and the adhesive were warmed to 65°C for 5 minutes to remove residual traces of solvent.

The dried adhesive on the liner was exposed to a 50 kGray dose of electron beam radiation at 175 keV with no liner on top of the adhesive. The adhesive was then laminated to reflective sheeting and subjected to a pop-off test in a manner identical to that in Examples 1A-1F and Comparative Example C1. After 4 weeks the pop-off of the laminated sheeting on the V-shaped area of the 2.25 mm omega shape was measured and found to be 1.0 mm.

### Example 3 And Comparative Example C3

Another acrylic adhesive was made by solution polymerization as follows: 95 parts of isooctyl acrylate and 5 parts of acrylic acid monomer were added to 81.8 parts of a solvent comprising 94 parts of ethyl acetate and 6 parts of isopropanol in a quart amber bottle. To this solution was added 0.2 parts VAZO™ 64 thermal free radical initiator. The contents of the bottle were purged with nitrogen for 2 minutes at a flow rate of 1 liter/minute and then were tumbled in a water bath for 24 hours at 55°C. The sample was used without further dilution. The polymer had an inherent viscosity of 0.67 and the adhesive solution was found to be 53.4 percent solids.

In Comparative Example C3, 9.16 microequivalents (µeq) of a bisamide crosslinker as described in Comparative Example C1 were added to the adhesive in Example 3. The appropriate amount of bisamide solution and the acrylic solution were mixed and coated out onto silicone release liner using a knife coater with the bar set to a 4 mil (100 micrometer) gap, The coated solution was allowed to air dry for 10 minutes to remove most of the solvent and then was heated at 150°C for 5 minutes to affect crosslinking of the system.

The cure conditions of, and gel content and pop off results obtained with, the adhesives in Example 3 and Comparative Example C3 are tabulated in Table 2.

**Table 2**

| Example No. | Cure | Gel Content (wt %) | Pop-off (mm) |
|---|---|---|---|
| C3 | 9.16 µeq bisamide | 69 | 4.3 |
| 3 | 50 kGray | 70 | 3.0 |

### Example 4 And Comparative Example C4

An acrylic adhesive was made by solution polymerization as follows: 93 parts of isooctyl acrylate and 7 parts of acrylic acid monomer were added to 81.8 parts of a solvent comprising 94 parts ethyl acetate and 6 parts isopropanol in a quart amber bottle. To this solution was added 0.2 parts VAZO™ 64 thermal free radical initiator. The contents of the bottle were purged with nitrogen for 2 minutes at a flow rate of 1 liter/minute and then were tumbled in a water bath for 24 hours at 55°C. The sample was used without further dilution. The polymer had an inherent viscosity of 0.69 and the adhesive solution was found to be 53.8 percent solids.

To make an adhesive in Comparative Example C4, 10.91 microequivalents (µeq) of a bisamide crosslinker as described in Comparative Example C1 were added to the adhesive solution in Example 4. The appropriate amount of bisamide solution and the acrylic solution were mixed and coated out onto silicone release liner using a knife coater with the bar set to a 4 mil (100 micrometer) gap. The coated solution was allowed to air dry for 10 minutes to remove most of the solvent and then was heated at 150°C for 5 minutes to affect crosslinking of the system.

The cure conditions of, and gel content and pop off results obtained with, the adhesives in Example 4 and Comparative Example C4 are tabulated in Table 3.

**Table 3**

| Example No. | Cure | Gel Content (wt %) | Pop-off (mm) |
|---|---|---|---|
| C4 | 10.91 µeq bisamide | 68 | 3.5 |
| 4 | 50 kGray | 68 | 2.5 |

### Example 5

An acrylic adhesive was made by solution polymerization as follows: 87.5 parts of isooctyl acrylate and 12.5 parts of acrylic acid monomer were added to 81.8 parts of a solvent comprising 94 parts ethyl acetate and 6 parts isopropanol in a quart amber bottle. To this solution was added 0.2 parts VAZO™ 64 thermal free radical initiator. The contents of the bottle were purged with nitrogen for 2 minutes at a flow rate of 1 liter/minute and then were tumbled in a water bath for 24 hours at 55°C. The sample was used without further dilution. The polymer had an inherent viscosity of 0.73 and the adhesive solution was found to be 43.9 percent solids.

In Comparative Example C5, 11.59 microequivalents (µeq) of a bisamide crosslinker as described in Comparative Example Cl were added to the acrylic adhesive solution in Example 5. The appropriate amount of bisamide solution and the acrylic solution were mixed and coated out onto silicone release liner using a knife coater with the bar set to a 4 mil (100 micrometer) gap. The coated solution was allowed to air dry for 10 minutes to remove most of the solvent and then was heated at 150°C for 5 minutes to affect crosslinking of the system.

The cure conditions of, and gel content and pop off results obtained with, the adhesives in Example 5 and Comparative Example C5 are tabulated in Table 4.

**Table 4**

| Example No. | Cure | Gel Content (wt %) | Pop-off (mm) |
|---|---|---|---|
| C5 | 11.59 µeq bisamide | 71 | 3.3 |
| 5 | 50 kGray | 69 | 0.3 |

Various modifications and alterations of this invention will become apparent to those skilled in the art and therefore the appended claims should not be deemed to cover only the specific examples herein.

## Claims

1. An information plate (10) comprising an embossed polar substrate (12) having raised indicia (14) protruding from a visible surface thereof and a continuous retroreflective sheeting adhered to the raised indicia and to the remainder of the visible surface of the polar substrate through an adhesive, characterized in that the retroreflective sheeting comprises an elastic, durable, and transparent cover film and the adhesive comprises an electron beam-cured, pressure-sensitive adhesive composition, the adhesive composition comprising an acrylic polymer formed by polymerizing a polar monomer with an acrylic monomer.

2. The information plate of claim 1 wherein the adhesive composition is a hot-melt pressure-sensitive adhesive composition.

3. The information plate of claim 1 wherein the acrylic monomer is selected from the group consisting of alkyl acrylates having an alkyl radical which contains from about 4 to about 12 carbon atoms, alkyl methacrylates having an alkyl radical which contains from about 6 to about 12 carbon atoms, and mixtures thereof.

4. The information plate of claim 1 wherein the polar monomer is selected from the group consisting of acrylic acid, methacrylic acid, itaconic acid, styrene sulfonic acid, maleic acid, fumaric acid, citraconic acid, and mixtures thereof.

5. The information plate of claim 1 wherein the adhesive composition comprises a copolymer of isooctyl acrylate and acrylic acid.

6. The information plate of claim 5 wherein the weight percent ratio of isooctyl acrylate to acrylic acid is about 87.5:12.5 to about 95:5.

7. The information plate of claim 1 wherein the electron beam dosage is between about 30 KGray (3 megarads) and about 80 KGray (8 megarads).

8. The information plate of claim 1 wherein the inherent viscosity of the adhesive composition before being cured is between about 0.5 and about 1.5 deciliters/gram.

9. The information plate of claim 1 wherein the polar substrate is aluminum.

10. The information plate of claim 1 wherein the retroreflective sheeting is selected from the group consisting of embedded-lens retroreflective sheetings and encapsulated-lens retroreflective sheetings.

11. The information plate of claim 1 wherein said indicia have an embossed depth of between about 0.15mm (60 mils) to about 0.3mm (120 mils).

12. A method of making an information plate according to any one of claims 1-11 comprising:
a) providing a polar substrate;
b) providing a retroreflective sheeting with an electron beam-cured, pressure-sensitive adhesive composition on the bottom thereof the adhesive composition comprising an acrylic polymer formed by polymerizing a polar monomer with an acrylic monomer and the retroreflective sheeting comprising an elastic, durable, and transparent cover film ;
c) adhering the bottom of the retrorefective sheeting to a major face of the polar substrate through the adhesive to form a composite; and
d) embossing the composite to form an embossed information plate comprising raised indicia which protrude from the major face of the polar substrate.

13. The method of claim 12 wherein embossing the composite is done within one hour of when adhering the retroreflective sheeting to the polar substrate is done.

## Patentansprüche

1. Informationstafel (10) umfassend ein geprägtes polares Substrat (12) mit erhöhten Zeichen (14), die aus einer sichtbaren Oberfläche davon hervortreten, und ein kontinuierliches retroreflektierendes Bahnenmaterial, das auf die erhöhten Zeichen und auf den Rest der sichtbaren Oberfläche des polaren Substrates mittels eines Klebstoffes aufgeklebt ist, dadurch gekennzeichnet, daß das retroreflektierende Bahnenmaterial einen elastischen, haltbaren und transparenten Deckfilm umfaßt, und der Klebstoff eine elektronenstrahlgehärtete Haftklebstoffzusammensetzung umfaßt, und die Klebstoffzusammensetzung ein Acrylatpolymer umfaßt, das durch die Polymerisation eines polaren Monomers mit einem Acrylatmonomer hergestellt wird.

2. Informationstafel nach Anspruch 1, wobei die Klebstoffzusammensetzung eine Schmelzhaftklebstoffzusammensetzung ist.

3. Informationstafel nach Anspruch 1, wobei das Acrylatmonomere aus Alkylacrylaten mit einem Alkylrest, der etwa 4 bis etwa 12 Kohlenstoffatome enthält, Alkylmethacrylaten mit einem Alkylrest, der etwa 6 bis etwa 12 Kohlenstoffatome enthält, und Gemischen davon ausgewählt wird.

4. Informationstafel nach Anspruch 1, wobei das polare Monomere aus Acrylsäure, Methacrylsäure, Itaconsäure, Styrolsulfonsäure, Maleinsäure, Fumarsäure, Citraconsäure und Gemischen davon ausgewählt wird.

5. Informationstafel nach Anspruch 1, wobei die Klebstoffzusammensetzung ein Copolymer aus Isooctylacrylat und Acrylsäure umfaßt.

6. Informationstafel nach Anspruch 5, wobei das Gewichtsprozentverhältnis von Isooctylacrylat zu Acrylsäure von etwa 87,5:12,5 bis etwa 95:5 beträgt.

7. Informationstafel nach Anspruch 1, wobei die Elektronenstrahlungsdosis zwischen etwa 30 kGray (3 Mrad) und etwa 80 kGray (8 Mrad) beträgt.

8. Informationstafel nach Anspruch 1, wobei die logarithmische Viskositätszahl der Klebstoffzusammensetzung, bevor sie gehärtet wird, zwischen etwa 0,5 und etwa 1,5 Deciliter/Gramm liegt.

9. Informationstafel nach Anspruch 1, wobei das polare Substrat Aluminium ist.

10. Informationstafel nach Anspruch 1, wobei das retroreflektierende Bahnenmaterial aus reflektierenden Bahnenmaterialien mit eingebetteten Linsen und aus reflektierenden Bahnenmaterialien mit eingekapselten Linsen ausgewählt wird.

11. Informationstafel nach Anspruch 1, wobei die Zeichen eine Prägungstiefe zwischen etwa 0,15 mm (60 mils) und etwa 0,3 mm (120 mils) aufweisen.

12. Ein Verfahren zur Herstellung einer Informationstafel nach einem der Ansprüche 1 bis 11 umfassend:
a) Bereitstellen eines polaren Substrates;
b) Bereitstellen eines retroreflektierenden Bahnenmaterials mit einer elektronenstrahlgehärteten Haftklebstoffzusammensetzung an der Unterseite, wobei die Klebstoffzusammensetzung ein Acrylatpolymer umfaßt, das durch Polymerisation eines polaren Monomers mit einem Acrylatmonomer hergestellt wird, und das retroreflektierende Bahnenmaterial einen elastischen, haltbaren und transparenten Deckfilm umfaßt;
c) Ankleben der Unterseite des retroreflektierenden Bahnenmaterials auf eine Hauptfläche des polaren Substrates mit Hilfe des Klebstoffes, wodurch ein Verbund hergestellt wird; und
d) Prägen des Verbundes zur Herstellung einer geprägten Informationstafel, die erhöhte Zeichen enthält, die von der Hauptfläche des polaren Substrates hervortreten.

13. Verfahren nach Anspruch 12, wobei die Prägung des Verbundes innerhalb einer Stunde nach dem Ankleben des retroreflektierenden Bahnenmaterials auf das polare Substrat vorgenommen wird.

## Revendications

1. Plaque d'immatriculation (10) comprenant un substrat polaire embouti (12) ayant une marque en relief (14) saillant à partir d'une surface visible de celle-ci et une feuille continue rétroréfléchissante adhérant à la marque en relief et au reste de la surface visible du substrat polaire à l'aide d'un adhésif,
caractérisée en ce que la feuille rétroréfléchissante comprend un film de couverture transparent, durable et élastique et en ce que l'adhésif comprend une composition auto-adhésive durcie par faisceau électronique, la composition adhésive comprenant un polymère acrylique formé en polymérisant un monomère polaire avec un monomère acrylique,

2. Plaque d'immatriculation selon la revendication 1, dans laquelle la composition adhésive est une composition auto-adhésive thermofusible.

3. Plaque d'immatriculation selon la revendication 1, dans laquelle le monomère acrylique est choisi dans le groupe formé des acrylates d'alkyle ayant un radical alkyle qui contient d'environ 4 à environ 12 atomes de carbone, des méthacrylates d'alkyle ayant un radical alkyle qui contient environ de 6 à environ 12 atomes de carbone et leurs mélanges.

4. Plaque d'immatriculation selon la revendication 1, dans laquelle le monomère polaire est choisi parmi le groupe formé de l'acide acrylique, l'acide méthacrylique, l'acide itaconique, l'acide styrènesulfonique, l'acide maléique, l'acide fumarique, l'acide citraconique et de leurs mélanges.

5. Plaque d'immatriculation selon la revendication 1, dans laquelle la composition adhésive comprend un copolymère d'acrylate d'isooctyle et de l'acide acrylique.

6. Plaque d'immatriculation selon la revendication 5, dans laquelle le rapport pondéral d'acrylate isooctylique à l'acide acrylique est d'environ 87,5:12,5 à environ 95:5.

7. Plaque d'immatriculation selon la revendication 1, dans laquelle la dose du faisceau électronique est comprise entre 30 kGray (3 Mrad) et environ 80 kGray (8 Mrad).

8. Plaque d'immatriculation selon la revendication 1, dans laquelle la viscosité intrinsèque de la composition adhésive avant d'être durcie est comprise entre environ 0,5 et environ 1,5 décilitres/gramme.

9. Plaque d'immatriculation selon la revendication 1, dans laquelle le substrat polaire est l'aluminium.

10. Flaque d'immatriculation selon la revendication 1, dans laquelle la feuille rétroréfléchissante est choisie dans le groupe formé des feuilles rétroréfléchissantes à lentilles enfouies et des feuilles rétroréfléchissantes à lentilles encapsulées.

11. Plaque d'immatriculation selon la revendication 1, dans laquelle ladite marque possède une profondeur d'emboutissage comprise entre environ 0,15 mm (60 mils) et environ 0,3 mm (120 mils).

12. Procédé de fabrication d'une plaque d'immatriculation selon l'une quelconque des revendications 1 à 11 consistant :
a) à fournir un substrat polaire ;
b) à fournir une feuille rétroréfléchissante avec, sur son fond, une composition auto-adhésive durcie par faisceau électronique, la composition adhésive comprenant un polymère acrylique formé en polymérisant un monomère polaire avec un monomère acrylique, et la feuille rétroréfléchissante comprenant un film de couverture transparent, durable et élastique ;
c) à faire adhérer le fond de la feuille rétroréfléchissante à une face principale du substrat polaire à l'aide de l'adhésif afin de former un composite ; et
d) à emboutir le composite afin de former une plaque d'immatriculation emboutie comprenant une marque en relief qui est saillante à partir de la face principale du substrat polaire.

13. Procédé selon la revendication 12, dans lequel on emboutit le composite dans l'heure qui suit l'action de faire adhérer la feuille rétroréfléchissante au substrat polaire.
